Europäisches Patentamt

European Patent Office

Office européen des brevets

(11) Publication number: **0 405 490 A2**

# EUROPEAN PATENT APPLICATION

(21) Application number: 90112235.8

(22) Date of filing: 27.06.90

(51) Int. Cl.5: **G01R 27/26, G01N 21/41**

(30) Priority: 30.06.89 JP 167087/89

(43) Date of publication of application:
**02.01.91 Bulletin 91/01**

(84) Designated Contracting States:
**DE FR GB**

(71) Applicant: **HITACHI, LTD.**
**6, Kanda Surugadai 4-chome**
**Chiyoda-ku, Tokyo 100(JP)**

(72) Inventor: **Hada, Masahiko**
**Hitachi Ebina Apartment C402**
**2113, Kamiimaizumi, Ebina-shi(JP)**
Inventor: **Ushio, Jiro**
**34-7-201, Okubo-2-chome**
**Konan-ku, Yokohama-shi(JP)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20 20**
**D-8000 München 86(DE)**

(54) Method of and apparatus for determining properties of material.

(57) A method of determining molecular polarizability is disclosed in which orbitals having a great influence on molecular polarizability are selected by utilizing the coupled-perturbed Hartree-Fock method (steps S3 and S4), and molecular polarizability is calculated by utilizing the configuration interaction method and by using only the selected orbitals (step S7).

F I G. I

# METHOD OF AND APPARATUS FOR DETERMINING PROPERTIES OF MATERIAL

## BACKGROUND OF THE INVENTION

The present invention relates to a method of and an apparatus for efficiently developing or improving a material having a favorable electric property (for example, a favorable dielectric constant or others) or a favorable optical property (for example, a favorable refractive index or non-linear optical phenomena), and more particularly to a method of and an apparatus for determining the property of such a material rapidly and accurately by calculating molecular polarizability through an improved method.

In order to determine the electric and optical properties of a material, it is necessary to determine the molecular polarizability of molecules which make the material.

Several methods for calculating molecular polarizability have hitherto been known. For example, the coupled-perturbed Hartree-Fock method (hereinafter referred to as "first method") is disclosed on pages 568 to 570 of the Chemical Physics Letters Vol. 53, No. 3, 1978, and the Iwata method which utilizes the CI method (namely, Configuration Interaction method), is disclosed on pages 544 to 549 of the Chemical Physics Letters Vol. 102, No. 6, 1983. As is well known, molecular polarizability $\alpha$ is defined by an equation $m = \alpha F + \beta F^2$, where m indicates a dipole moment, F an electric field, and $\beta$ molecular hyperpolarizability. Since the molecular polarizability $\alpha$ is for greater than the molecular hyperpolarizability $\beta$, the hyperpolarizability $\beta$ contributes little to the property of a material.

According to the first method, the molecular polarizability $\alpha$ is given by the following equation:

$$a_{tu} = \sum_{r,s} V_{rs}^{t} \sum_{i}^{OCC} \sum_{j}^{VRT} (C_{ri}C_{sj} + C_{rj}C_{si})A_{ji}^{u} \quad \ldots \quad (1)$$

where C indicates molecular orbital coefficients of a wave function

$$\psi = \begin{bmatrix} C_{11} & C_{22} & C_{33} \\ C_{12} & \cdot & \cdot \\ \cdot & \cdot & \cdot \\ \cdot & \cdot & \cdot \end{bmatrix} ,$$

the wave function $\psi$ is obtained by the Hartree-Fock approximation, V indicates a perturbation term due to an external electric field, A indicates first order coefficients in a case where C is expanded in a power series of the electric field strength, OCC indicates that summation with respect to occupied orbitals is carried out, VRT indicates that summation with respect to virtual orbitals is carried out, r and s indicate the numbers of the basis functions, and each of t and u indicates one of x-, y- and z-directions. In other words, the molecular polarizability in each of the (x, x)-, (y, y)-, (z, z)-, (x, y)-, (x, z)- and (y, z)-directions can be expressed by $\alpha_{tu}$. The molecular polarizability $\alpha$ means an induced moment per unit field. Accordingly, the molecular polarizability $\alpha_{tu}$ in a desired one of the above-mentioned six directions indicates an induced moment which is generated within a material in one of x-, y- and other directions when an electric field is applied to the material in one of the above directions. The sum of three diagonal values of $\alpha_{tt}$ indicates the molecular polarizability $\alpha$.

As is evident from the equation (1), in a case where the molecular polarizability $\alpha$ is calculated by the first method, it is necessary to determine wave functions, the number of which is equal to the sum of the number of occupied orbitals and the number of virtual orbitals.

While, in a case where the wave function $\psi$ indicating an excited state of a molecule is formed by the CI method, the molecular polarizability $\alpha$ is given by the following equation:

$$\alpha_{tu} = \sum_{I} \frac{2 \, (\psi_0 | v^t | \psi_I) \, (\psi_0 | v^u | \psi_I)}{E_1 - E_0} \qquad \dots \ (2)$$

where each of t and u indicates one of x-, y- and z-directions, $E_l$ indicates the energy of an l-th excited state, I indicates the numbers of the energy levels, $\psi_0$ is a wave function indicating the ground state of the molecule, and $E_0$ indicates the energy of the ground state. The Iwata method provides an algorithm for calculating the equation (2) efficiently.

In a case where the molecular polarizability $\alpha$ is determined by using the equation (2), the number of wave functions inserted in the equation (2) is dependent upon the number of excited electrons, and is usually proportional to the third or fourth power of the number of orbitals (namely, sum of the number of occupied orbitals and the number of virtual orbitals).

Accordingly, it is not only difficult but also timeconsuming to determine the molecular polarizability of a molecule having a large number of orbitals, by the above calculation method which utilizes the CI method. This calculation method will hereinafter be referred to as "second method". In more detail, when the second method is used, only the molecular polarizability of a molecule composed of a few atoms can be calculated by a large scale computer. Thus, the second method cannot be used for improving or developing an actual material.

While, the number of wave functions used in the first method is smaller than the number of wave functions used in the second method by two or three orders of magnitude. Accordingly, the first method can calculate the molecular polarizability of a fairly large molecule. However, in a framework of the Hartree-Fork approximation, the first method is not applicable to a radical and a molecule which is not in a stable structure. Further, it is difficult to calculate the frequency dependence of molecular polarizability accurately by the first method. That is, the accuracy of the above calculation is low. Accordingly, the use of the first method for the purpose of improving the electric or optical property of a material will excite no little apprehension.

Further, according to a prior art, when the second method is executed orbitals having little effect on the molecular polarizability are eliminated on the basis of values of orbital energy, to reduce the amount of calculation. However, the orbital energy and the molecular polarizability have not connection with each other. Accordingly, the molecular polarizability determined in the above manner will have a serious error.

Further, selecting orbitals on the basis of the property of them is another known method for selecting orbitals which are used in the second method. It is described on pages 5387-5395 of J. Am. CHem. Soc. 1986.108. In this method, however, it takes a lot of time to carry out the above selection, and selected orbitals cannot gurantee high accuracy in the second method for calculating molecular polarizability.

SUMMARY OF THE INVENTION

It is an object of the present invention to provide a method of and an apparatus for calculating the polarizability of a molecule which makes a material and has a large molecular weight, accurately and rapidly by finding molecular orbitals having little effect on the polarizability of the molecule efficiently and rapidly, to determine the electric or optical property of the material on the basis of the molecular polarizability thus obtained.

In order to attain the above object, according to the present invention, molecular polarizability which is necessary to determine the electric and optical properties of a material and is hard to calculate, is calculated in the following manner. That is, molecular polarizability is decomposed into dividual values. produced on a one-to-one basis for each molecular orbitals, by utilizing the first method, and molecular orbitals having little effect on the molecular polarizability are determined on the basis of the dividual values thus obtained. Then, the CI method is carried out by using only molecular orbitals having a great influence on molecular polarizability, and the wave functions thus obtained are inserted in the equation (2), to determine molecular polarizability.

Further, it is another object of the present invention to provide a method of and an apparatus for determining the value of molecular polarizability rapidly and accurately.

BRIEF DESCRIPTION OF THE DRAWINGS

Fig. 1 is a pictorial diagram showing the whole construction of an embodiment of an apparatus for determining a property of a material in accordance with the present invention.

Fig. 2 is a block diagram showing the data path in the embodiment of Fig. 1.

Fig. 3 is a flow chart for explaining a first embodiment of a method of determining a property of a material in accordance with the present invention.

Fig. 4 is a flow chart for explaining the step S4 of Fig. 3 in detail.

Fig. 5 is a flow chart for explaining a second embodiment of a method of determining a property of a material in accordance with the present invention.

Fig. 6 shows data which is displayed on a display screen by the second embodiment.

Fig. 7 is a flow chart for explaining a third embodiment of a method of determining a property of a material in accordance with the present invention.

Fig. 8 is a flow chart for explaining a fourth embodiment of a method of determining a property of a material in accordance with the present invention.

Fig. 9 shows a graph which is displayed on a display screen by the fourth embodiment.

Fig. 10 is a flow chart for explaining a fifth embodiment of a method of determining a property of a material in accordance with the present invention.

Fig. 11A shows that graph displayed in the fifth embodiment which indicates

$$\sum_{a=1}^{n} \alpha(a)$$

based upon the coupled-perturbed Hartree-Fock method.

Fig. 11B shows a graph which indicates

$$\sum_{a=1}^{n} \alpha(a)$$

based upon the CI method.

## DESCRIPTION OF THE PREFERRED EMBODIMENTS

Now, embodiments of the present invention will be explained.

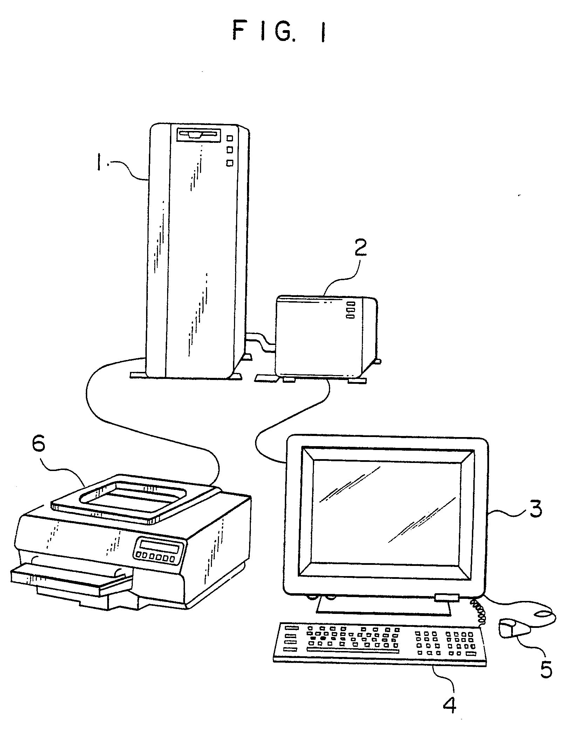

Fig. 1 shows the whole construction of an embodiment of an apparatus for determining the dielectric constant of a material in accordance with the present invention. Referring to Fig. 1, a processing unit 1 carries out calculation necessary for the determination of the dielectric constant. Further, a display device 3, a keyboard 4 and a mouse 5 are used for inputting initial values, displaying intermediate results, selecting molecular orbitals, and asking a processing method. A printer 6 is used for printing out final results, and a magnetic disk device 2 is a random access memory for storing intermediate data of calculation.

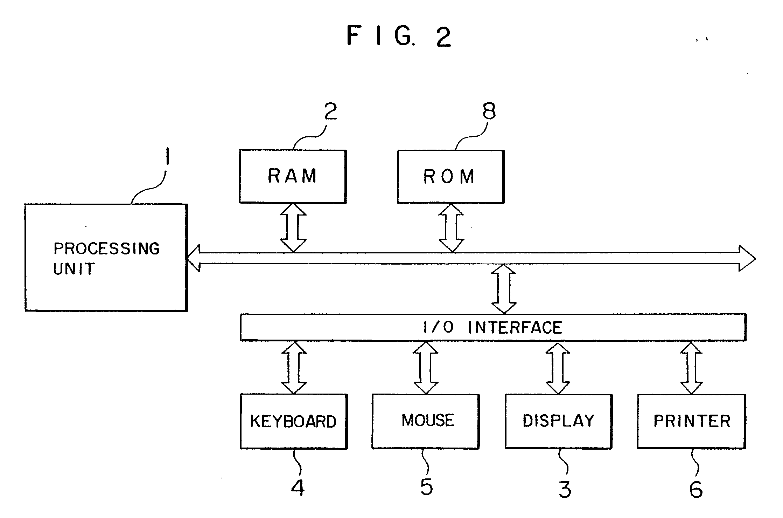

Fig. 2 is a block diagram showing the data path in the embodiment of Fig. 1. In Fig. 2, reference numeral 8 designates a read only memory for storing programs. In more detail, the read only memory 8 stores therein a program I for calculating a wave function $\psi$ by the Hartree-Fock approximation, and for inserting the wave function thus obtained in the equation (1) to decompose molecular polarizability into dividual values. Each of the dividual values of molecular polarizability indicates the contribution of each molecular orbital to the molecular polarizability, and is given by the following equations:

$$\alpha_{i_{tu}} = \sum_{r,s} V_{rs}^{t} \sum_{j}^{VRT} (C_{ri}C_{sj} + C_{rj}C_{si}) A_{ji}^{u}$$

$$\alpha_{j_{tu}} = \sum_{r,s} V_{rs}^{t} \sum_{i}^{OCC} (C_{ri}C_{sj} + C_{rj}C_{si}) A_{ji}^{u} \quad \cdots \quad (3)$$

where $t$ indicates the numbers of the occupied orbitals, and $j$ the numbers of the virtual orbitals.

The read only memory 8 further stores therein a program II for selecting molecular orbitals on the basis of the dividual values of molecular polarizability and for displaying the selected orbitals, a program III for calculating molecular polarizability by the second method, and a program IV for calculating a dielectric constant.

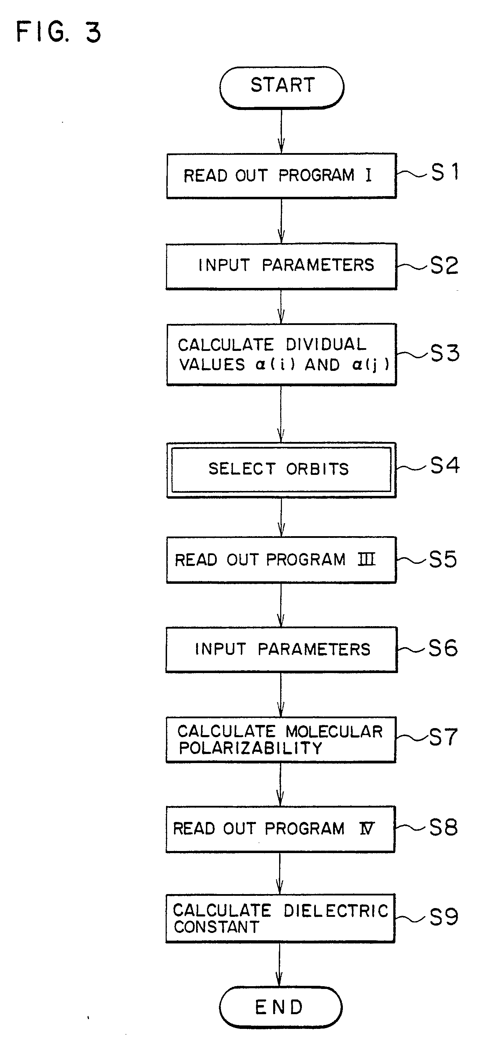

Next, the operation of the embodiment of Figs. 1 and 2 will be explained, with reference to Fig. 3 which is a flow chart showing a first embodiment of a method of determining a property of a material in accordance with the present invention.

First, the processing unit 1 reads out the program I from the memory 8 (step S1). Then, an operator inputs parameters with respect to the molecular structure of a molecule to be studied, with the aid of the keyboard 4 or the mouse 5 (step S2). In step S3, dividual values $\alpha(a)$ which are produced on a one-to-one basis for each orbital a , are calculated by the processing unit 1.

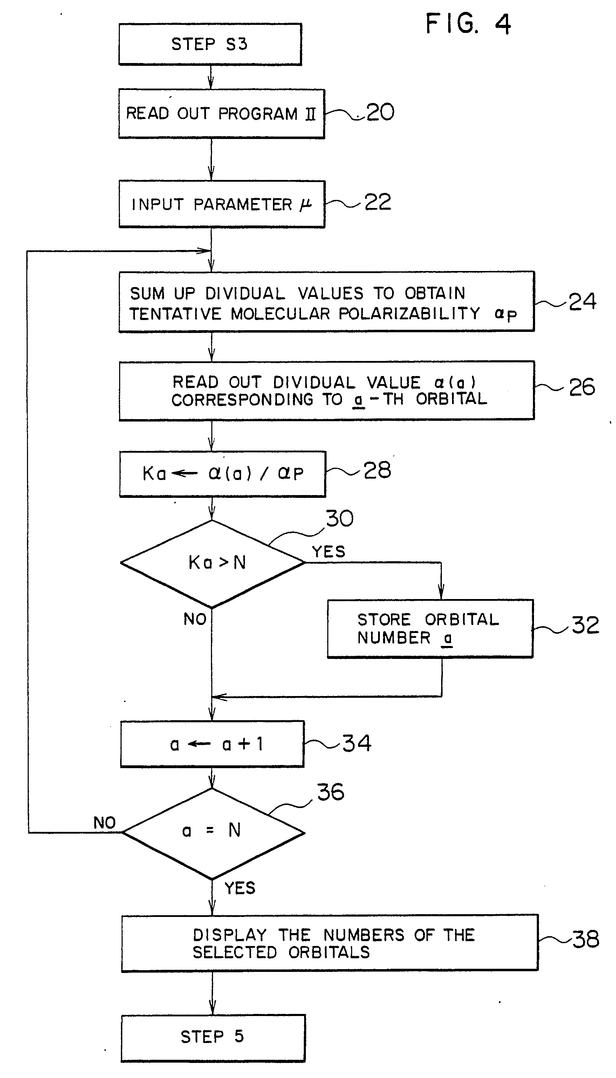

Next, orbitals are selected in accordance with the steps of procedure shown in Fig. 4 (step S4). Then, the program III for calculating the molecular polarizability by the second method is read out from the memory 8, to be supplied to the processing unit 1 (step S5). In step S6, necessary parameters are inputted. In step S7, the molecular polarizability is calculated by the second method on the basis of the selected orbitals. Thereafter, the program IV for calculating a dielectric constant is read out from the memory 8, to be supplied to the processing unit 1 (step S8), and thus the dielectric constant of a material is calculated from the above molecular polarizability (step S9). A method of determining the dielectric constant from the molecular polarizability is well known. For example, the molecular polarizability and the volume of the molecule are first determined, and then the dielectric constant is determined from Clausius-Masotti's relation.

Next, the processing in the step S4 will be explained, with reference to Fig. 4.

First, the program II is read out from the memory 8, to be supplied to the processing unit 1 (step 20), and then a parameter $\mu$ is inputted (step 22). Next, the dividual values $\alpha(a)$ obtained in the step S3 are summed up, to obtain tentative molecular polarizability $\alpha_p$ (step 24). Then, a dividual value $\alpha(a)$ corresponding to the a -th orbital is read out from the memory 2 (step 26). In step S28, a ratio of the dividual value $\alpha(a)$ to the tentative molecular polarizability $\alpha_p$, that is, a contributive ratio $K_a$ is calculated. The contributive ratio $K_a$ is compared with the parameter $\mu$ (step 30). When the contributive ratio $K_a$ is greater than the parameter $\mu$, that is, when the orbital corresponding to the dividual value greatly contributes to molecular polarizability, the number of the orbital is stored in the memory 2 (step 32). When it is judged in the step 30 that the contributive ratio $K_a$ is less than or equal to the parameter $\mu$, the number of the orbital is not stored in the memory 2. The above processing is carried out for all the orbitals through steps 34 and 36. The numbers of the orbitals capable of satisfying the relation $K_a > \mu$ are read out from the memory 2, to be displayed on the display screen of the display device 3 (step 38). Thus, orbitals which contribute greatly to molecular polarizability, can be selected. Incidentally, reference character N in the step 36 designates the final orbital number.

The first and second methods for calculating molecular polarizability are different in manner of approximation from each other, but describe the same physical phenomenon. Accordingly, an orbital which has a small contributive ratio in the above processing, will contribute little to the molecular polarizability calculated by the second method.

The accuracy and processing time of the molecular polarizability determining method shown in Figs. 3 and 4 will be explained below.

First, let us consider an ethylene molecule. In the step S2 of Fig. 3, the distance $R_{CC}$ (namely, distance between carbon atoms) is set to 0.134 nm, the distance $R_{CH}$ (namely, distance between a carbon atom and a hydrogen atom) is set to 0.1087 nm, and the angle $\angle HCH$ is set to 62.4 degree. Further, 74 basis functions are used by adding several kinds of bases to the basis 4-31G. The parameter $\mu$ inputted in the step 22 is set to 0.1. Thus, 35 orbitals are selected. The molecular polarizability $\alpha_{tu}$ which is calculated in the steps S5 to S7 of Fig. 3 by using the selected orbitals, and the molecular polarizability $\alpha_{t,u}$ which is calculated through the second method by using all the orbitals, are shown in the following table I. It is to be noted that a time necessary for calculation is also shown in the table I.

TABLE I

| molecular polarizability of ethylene molecule and calculation time[1] | | | | |
|---|---|---|---|---|
| molecular orbitals | molecular polarizability | | | calculation time |
| | $\alpha_{xx}$ | $\alpha_{yy}$ | $\alpha_{zz}$ | |
| selected by step S4 | 42.4 | 27.9 | 22.0 | 3' 45" |
| all the orbitals | 43.2 | 28.7 | 23.0 | 13' 08" |

1) calculated by M680H

In the table I, M6807 is the trade name of a large scale computer manufactured by Hitachi Ltd.

As shown in the table I, the molecular polarizability $\alpha_{xx}$ due to the method of Figs. 3 and 4 is smaller than the molecular polarizability $\alpha_{xx}$ due to the second method using all the orbitals by only 2%, but a calculation time necessary for the former method is far shorter than a calculation time necessary for the latter method. Further, a calculation time for carrying out the Hartree-Fork approximation and the coupled-purturbed Hartree-Fork method which are necessary to select molecular orbitals, is only a few seconds, and thus a ratio of this calculation time to the total calculation time is very small.

The calculation accuracy and calculation time in a case where the molecular polarizability of $Si_2H_6$ is calculated in a similar manner to the above-mentioned, are listed in the following table II.

TABLE II

| (calculation results for $Si_2H_6$) | | | | |
|---|---|---|---|---|
| molecular orbitals used in calculation | molecular polarizability | | | calculation time[1] |
| | $\alpha_{xx}$ | $\alpha_{yy}$ | $\alpha_{zz}$ | |
| selected by step S4 | 73.5 | 57.1 | 68.1 | 7' 13" |
| all the orbitals | 74.0 | 58.9 | 69.9 | 35' 29" |

1) calculated by M680H

As is evident from the table II, the molecular polarizability which is obtained by using the selected orbitals, is about 98 percent of the molecular polarizability which is obtained by using all the orbitals, and a calculation time necessary for calculating the molecular polarizability by using only the selected orbitals is about one-fifth a calculation time necessary for calculating the molecular polarizability by using all the orbitals.

In the case where the molecular polarizability of $Si_2H_6$ is calculated, the distance $R_{Si-Si}$ and the distance $R_{Si-H}$ are set to 0.2231 nm and 0.167 nm, respectively, in the step S2 of Fig. 3. Further, 98 basis functions are used by adding some kinds of bases to the basis 4-31G. The results of calculation carried out in the step S3 of Fig. 3 are shown in the table III mentioned later. In addition to the dividual values of molecular polarizability, values of orbital energy are shown in the table III. The values of orbital energy are secondarily obtained when the equations (3) are calculated. It is to be noted that orbitals have hitherto been selected on the basis of the values of orbital energy.

TABLE III

| kind of orbital | orbital number | orbital energy | $\alpha(i)_{xx}$ | $\alpha(i)_{yy}$ | $\alpha(i)_{zz}$ | Result of selection |
|---|---|---|---|---|---|---|
| occupied orbital | 1 | -68.4172 | 0.0000 | 0.0000 | 0.0000 | |
| | 2 | -68.4160 | 0.0000 | 0.0000 | 0.0000 | |
| | 3 | -6.1429 | 0.0050 | 0.0025 | 0.0028 | |
| | 4 | -6.1427 | 0.0026 | 0.0024 | 0.0027 | |
| | 5 | -4.2447 | 0.0118 | 0.0036 | 0.0041 | |
| | 6 | -4.2440 | 0.0068 | 0.0099 | 0.0050 | |
| | 7 | -4.2438 | 0.0077 | 0.0100 | 0.0047 | |
| | 8 | -4.2438 | 0.0217 | 0.0048 | 0.0047 | |
| | 9 | -4.2435 | 0.0058 | 0.0042 | 0.0126 | |
| | 10 | -4.2432 | 0.0078 | 0.0043 | 0.0122 | |
| | 11 | -0.7435 | 0.7383 | 1.0740 | 0.9917 | O |
| | 12 | -0.6515 | 2.4458 | 1.4418 | 1.5162 | O |
| | 13 | -0.4830 | 3.9234 | 14.8155 | 6.8446 | O |
| | 14 | -0.4771 | 4.1154 | 7.3183 | 17.8990 | O |
| | 15 | -0.4608 | 12.8544 | 15.2218 | 6.2531 | O |
| | 16 | -0.4451 | 14.3365 | 8.0171 | 20.9979 | O |
| | 17 | -0.3983 | 36.0424 | 9.2759 | 13.2854 | O |
| | | | $\alpha(j)_{xx}$ | $\alpha(j)_{yy}$ | $\alpha(j)_{zz}$ | |
| virtual orbital | 18 | 0.1092 | 11.7296 | 5.0775 | 13.2392 | O |
| | 19 | 0.1114 | 0.5333 | 3.2923 | 14.8738 | O |
| | 20 | 0.1260 | 11.3982 | 3.8367 | 12.5690 | O |
| | 21 | 0.1326 | 28.3337 | 1.2039 | -0.0635 | O |
| | 22 | 0.1530 | 0.0893 | 10.1049 | 1.8758 | O |
| | 23 | 0.1570 | 0.1070 | 6.3389 | 5.8470 | O |
| | 24 | 0.1771 | 1.7994 | 9.7454 | 6.2957 | O |
| | 25 | 0.2240 | 1.2038 | -0.0266 | 0.0827 | O |
| | 26 | 0.2404 | 2.3799 | 2.3562 | 4.1361 | O |
| | 27 | 0.2404 | 2.4099 | 6.5202 | 0.4747 | O |
| | 28 | 0.2703 | 2.3267 | 0.0808 | 0.8826 | O |
| | 29 | 0.2773 | 1.8394 | 0.4746 | 0.3108 | O |
| | 30 | 0.2843 | 0.0298 | 0.6447 | 1.9383 | O |

- To be cont'd -

EP 0 405 490 A2

TABLE III   (Cont'd)

| | | | | |
|---|---|---|---|---|
| 31 | 0.2846 | 0.3018 | 0.8680 | 0.8732 |
| 32 | 0.3177 | 2.6746 | 0.8392 | 0.0278 |
| 33 | 0.3230 | 0.3186 | 1.1431 | 0.5355 |
| 34 | 0.3715 | 1.1948 | 0.1504 | 0.0226 |
| 35 | 0.4010 | 0.1485 | 0.0015 | 0.5218 |
| 36 | 0.4036 | 1.0614 | 0.2364 | -0.0095 |
| 37 | 0.4131 | 0.0692 | 0.4608 | 0.8852 |
| 38 | 0.4180 | 1.1880 | 0.0454 | 0.2177 |
| 39 | 0.4209 | 0.4055 | 0.3577 | 0.0383 |
| 40 | 0.4471 | 0.0358 | 0.5241 | 0.0049 |
| 41 | 0.4521 | 0.2893 | 0.0164 | 0.0021 |
| 42 | 0.4532 | 0.0203 | 0.6035 | 0.4208 |
| 43 | 0.4720 | 0.0290 | 0.6039 | 0.4918 |
| 44 | 0.5291 | 0.1273 | 0.1857 | 0.0357 |
| 45 | 0.5317 | 0.1895 | 0.1111 | 0.0055 |
| 46 | 0.5337 | 0.0822 | 0.1836 | 0.0318 |
| 47 | 0.5718 | 0.2051 | 0.0308 | 0.0177 |
| 48 | 0.5932 | 0.1798 | 0.0711 | 0.0569 |
| 49 | 0.6000 | 0.1499 | 0.0238 | 0.2112 |
| 50 | 0.6250 | 0.3046 | 0.0654 | 0.0031 |
| 51 | 0.6325 | 0.1742 | 0.0321 | 0.2106 |
| 52 | 0.6442 | 0.0717 | 0.1138 | 0.0174 |
| 53 | 0.6477 | 0.1655 | 0.0455 | 0.1739 |
| 54 | 0.6637 | 0.1662 | 0.1453 | 0.0253 |
| 55 | 0.7245 | 0.0124 | 0.0782 | 0.0089 |
| 56 | 0.7312 | 0.0978 | 0.0076 | 0.0140 |
| 57 | 0.7585 | 0.1222 | 0.0772 | 0.0344 |
| 58 | 0.7763 | 0.0083 | 0.0007 | 0.0095 |
| 59 | 0.8128 | -0.0013 | -0.0014 | 0.0494 |
| 60 | 0.8213 | 0.0764 | 0.0344 | -0.0001 |
| 61 | 0.8230 | 0.0314 | 0.0002 | 0.0378 |
| 62 | 0.8598 | 0.0023 | -0.0006 | 0.0060 |

- To be cont'd -

TABLE III (Cont'd)

| | | | | |
|---|---|---|---|---|
| 63 | 0.0280 | 0.0000 | 0.0097 | 0.8660 |
| 64 | 0.0177 | 0.0093 | 0.1400 | 0.8687 |
| 65 | 0.0101 | 0.0070 | -0.0141 | 0.8878 |
| 66 | 0.1095 | 0.0117 | 0.0036 | 0.9288 |
| 67 | 0.0715 | 0.0080 | 0.0024 | 0.9543 |
| 68 | 0.0233 | 0.1800 | 0.0236 | 0.9707 |
| 69 | 0.0003 | 0.1453 | -0.0112 | 0.9818 |
| 70 | 0.0340 | -0.0271 | 0.0020 | -1.0140 |
| 71 | 0.0049 | 0.0051 | 0.0524 | -1.1218 |
| 72 | 0.0131 | 0.0189 | 0.0426 | -1.1620 |
| 73 | -0.0007 | 0.0019 | 0.0008 | -1.6070 |
| 74 | -0.0017 | 0.0014 | 0.0000 | -1.6222 |
| 75 | 0.0051 | 0.0057 | -0.0074 | -1.6561 |
| 76 | -0.0052 | 0.0181 | 0.0025 | -1.6690 |
| 77 | 0.0016 | 0.0012 | -0.0040 | -1.6904 |
| 78 | 0.0279 | 0.0017 | 0.0001 | -1.7057 |
| 79 | 0.0218 | -0.0117 | -0.0008 | -1.7120 |
| 80 | 0.0000 | 0.0196 | 0.0149 | -1.7381 |
| 81 | 0.0046 | 0.0052 | 0.0234 | -1.8025 |
| 82 | 0.0050 | 0.0089 | 0.0249 | -1.8259 |
| 83 | 0.0015 | 0.0000 | -0.0129 | -1.8306 |
| 84 | -0.0009 | -0.0013 | 0.0096 | -1.8328 |
| 85 | 0.0000 | 0.0026 | -0.0135 | -1.8525 |
| 86 | 0.0022 | 0.0029 | 0.0052 | -1.8683 |
| 87 | 0.0009 | 0.0000 | -0.0009 | -1.9094 |
| 88 | 0.0000 | -0.0041 | -0.0019 | -1.9127 |
| 89 | -0.0043 | 0.0020 | 0.0056 | -1.9488 |
| 90 | 0.0063 | 0.0018 | 0.0009 | -1.9673 |
| 91 | -0.0019 | 0.0000 | 0.0013 | -1.9926 |
| 92 | 0.0014 | -0.0002 | 0.0005 | -2.0041 |
| 93 | 0.0000 | -0.0001 | 0.0002 | -2.0553 |
| 94 | 0.0000 | 0.0009 | 0.0004 | -2.0883 |
| 95 | 0.0032 | 0.0020 | 0.0026 | -2.1417 |
| 96 | 0.0020 | 0.0012 | 0.0038 | -2.2293 |
| 97 | | | | -2.4692 |
| 98 | | | | -2.5583 |

In the step 22 of Fig. 4, the parameter μ with respect to the contributive ratio is set to 0.01. As a result, 29 orbitals are selected. The selected orbitals are indicated by a sign O in the table III.

A is evident from the table III, the tenth orbital is greatly different in orbital energy from the eleventh orbital. When occupied orbitals are selected on the basis of this energy difference, the selected occupied orbitals will agree with the occupied orbitals selected in the step S4. However, the virtual orbitals have gradually changing energy values, and hence it is unreasonable to select virtual orbitals on the basis of orbital energy.

In the above, explanation has been made of a case where the dielectric constant of a material is calculated. However, the step S9 of calculating the dielectric constant may be replaced by a step of calculating a different magnetic property of the material or an optical property of the material (for example, the refractive index or non-linear optical characteristic of the material).

The refractive index can be determined from the molecular polarizability by Clausius-Mosotti equation in the following manner. (See Electrical Property Materials. PP148-149 (1969))

$$\frac{\varepsilon - 1}{\varepsilon + 2} = \frac{4}{3} \pi \rho \alpha, \quad n = \sqrt{\varepsilon}$$

where
$\varepsilon$ indicates dielectric constant,
$\rho$ indicates molecular density,
$\alpha$ indicates molecular polarizability,
and
n indicates refractive index.

Further, the non-linear optical characteristic can be determined from the molecular polarizability by the wellknown equation of Lalama and Garito.

In the first embodiment shown in Figs. 3 and 4, necessary parameters are inputted in the steps S2, 22 and S6. Alternatively, the parameters may be previously in the memory 2, to be read out therefrom in accordance with a program. Such a modified version is is applicable to other embodiments mentioned below.

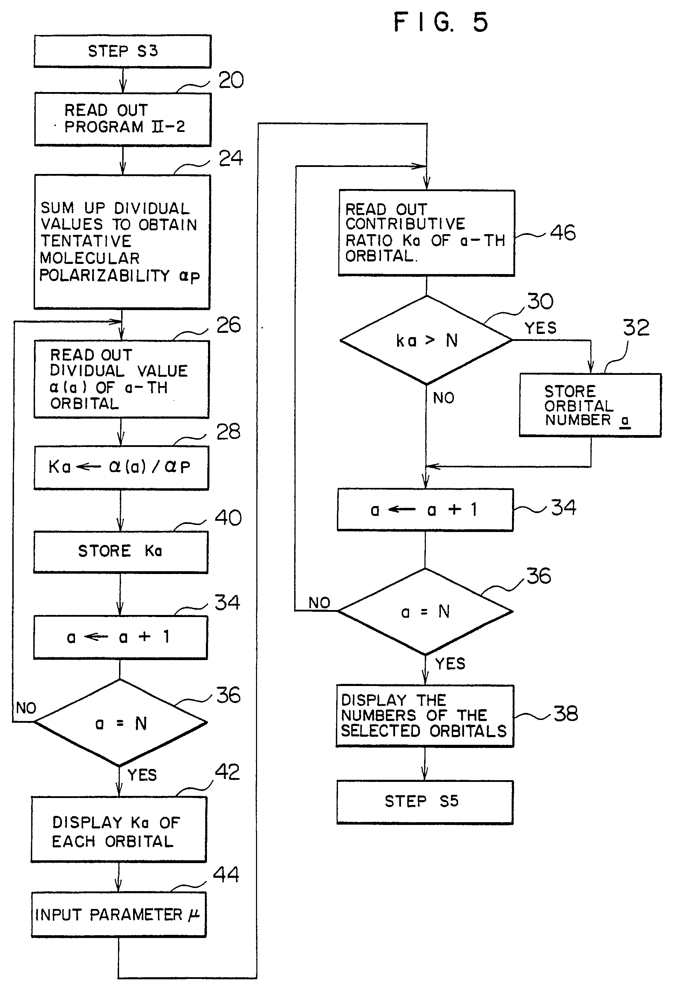

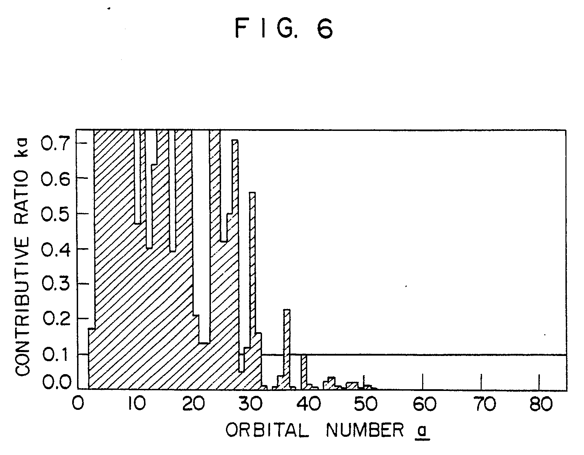

Next, explanation will be made of a second embodiment of a method of determining a property of a material in accordance with the present invention. The second embodiment is different from the first embodiment in calculation method for determining molecular polarizability. Accordingly, the read only memory 8 stores therein a program II-2 for calculating molecular polarizability in the second embodiment. The feature of the second embodiment will be explained, with reference to Figs. 5 and 6. In Figs. 4 and 5, the same reference numerals designate like steps, and the explanation of some of the like steps will be omitted from the following description.

In the second embodiment, the contributive ratio $K_a$ of each orbital is calculated (step 28). The values of $K_a$ for all the orbitals are stored in the memory 2 (step 40), to be displayed on the display screen of the display device 3 (step 42). Fig. 6 shows an example of displayed data which example indicates values of contributive ratio $K_a$ of ethylene molecule.

An operator determines the parameter $\mu$ with respect to the contributive ratio $K_a$, on the basis of data displayed on the display screen. In the example shown in Fig. 6, the parameter $\mu$ is set to 0.1 (step 44). Then, the contributive ratio $K_a$ of each orbital is compared with the parameter $\mu$ (steps 46 and 30 to 36). The numbers a of the selected orbitals are displayed on the display screen (step 38).

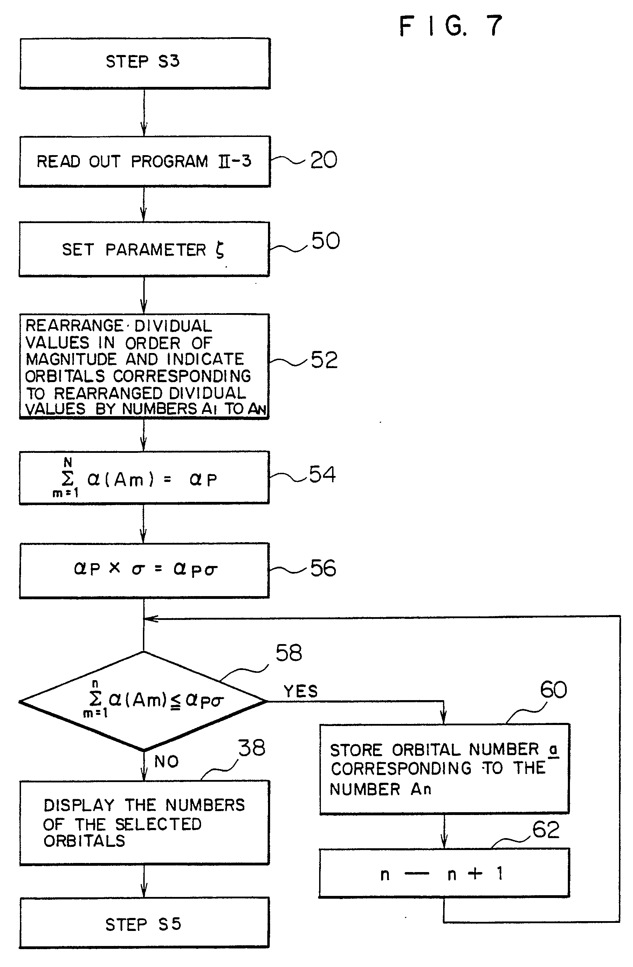

Next, explanation will be made of a third embodiment of a method of determining a property of a material in accordance with the present invention. The third embodiment, also, uses an improved method of calculating molecular polarizability. Accordingly, the read only memory 8 stores therein a program II-3 for calculating molecular polarizability in the third embodiment. Now, the feature of the third embodiment will be explained below, with reference to Fig. 7. In Figs. 4 and 7, the same reference numerals designate like steps, and the explanation of some of the like steps will be omitted from the following description.

In step 50, a parameter $\sigma$ is inputted which lies in a range from 90 to 99%. Next, the dividual values $\alpha(a)$ of molecular polarizability are rearranged in order of magnitude, and the orbital numbers a of the dividual values $\alpha(a)$ thus rearranged are replaced by $A_m$ (step 52). Thus, the dividual value $\alpha$ corresponding to the $A_m$-th orbital is expressed by $a(A_m)$. In step 54, the sum of all the dividual values $\alpha$ is calculated and expressed by $\alpha_p$, that is, the sum $\alpha_p$ given by an equation

$$\sum_{m=1}^{N} \alpha(A_m) = \alpha_p$$

(where N indicates the number of orbitals or the number of the final orbital) is calculated. It is to be noted that this sum is equal to the tentative molecular polarizability. Next, the product of the sum $\alpha_p$ and the parameter $\sigma$ is calculated and expressed by $\alpha_{p\sigma}$ (step 56). Next, the dividual values $\alpha(A_m)$ arranged in order

EP 0 405 490 A2

of magnitude are successively summed up, that is,

$$\sum_{m=1}^{n} \alpha(A_m)$$

is calculated (step 58). The orbital numbers $\underline{a}$ corresponding to the dividual values $\alpha(A_m)$ are successively stored in the memory 2 till the sum

$$\sum_{m=1}^{n} \alpha(A_m)$$

exceeds the product $\alpha_{p\sigma}$ (steps 60 and 62). When the sum

$$\sum_{m=1}^{n} \alpha(A_m)$$

exceeds the product $\alpha_{p\sigma}$, the orbital numbers $\underline{a}$ stored in the memory 2 are displayed on the display screen, to indicate selected orbitals.

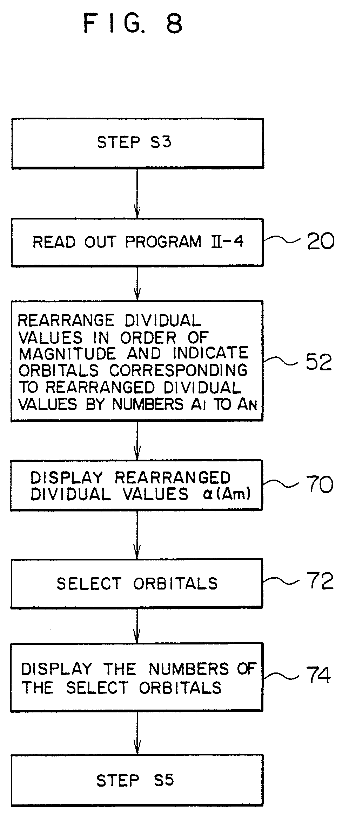

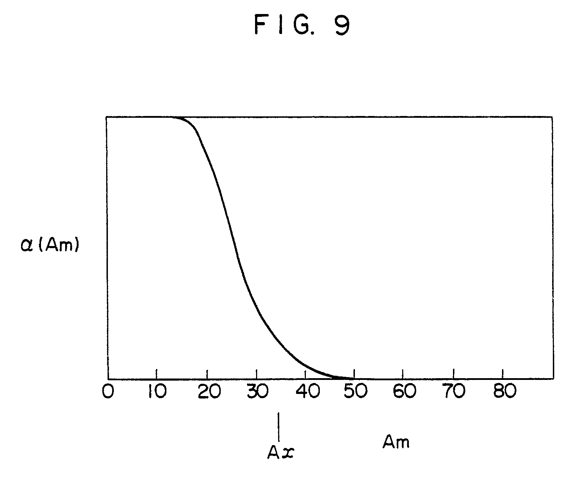

Next, explanation will be made of a fourth embodiment of a method of determining a property of a material in accordance with the present invention. The fourth embodiment is a modified version of the third embodiment. Accordingly, the read only memory 8 stores therein a program II-4 for calculating molecule polarizability in the fourth embodiment. Now, the fourth embodiment will be explained below, with reference to Figs. 8 and 9. In Figs. 4 and 8, the same reference numerals designate like steps, and the explanation of some of the like steps will be omitted from the following description.

Referring to Fig. 8, the dividual values $\alpha(A_m)$ rearranged in order of magnitude are displayed on the display screen (step 70). Fig. 9 shows the dividual values $\alpha(A_m)$ of ethylene molecule displayed on the display screen. An operator selects orbitals on the basis of the displayed data (step 72). For example, orbitals below the $A_x$-th orbital, orbital, that is, the $A_1$-th to $A_{x-1}$-th orbitals are selected. In step 74, the orbital numbers $\underline{a}$ corresponding to the $A_1$-th to $A_{x-1}$-th orbitals are displayed on the display screen, to indicate selected orbitals.

Further, it is desirable to insert, between the step 52 and the step 70, a step of calculating the tentative molecular polarizability $\alpha_p$ (namely, the step 54 of Fig. 7) and a step of calculating a ratio of the sum

$$\sum_{m=1}^{n} \alpha(A_m)$$

to the tentative molecular polarizability $\alpha_p$ (where $n = 1, 2, \ldots$ and N), and to display values of the above ratio stepwise in the step 70 in such a manner that an orbital number $A_n$ is plotted on the ordinate of Fig. 9 each time the above ratio is increased by, for example, 0.1.

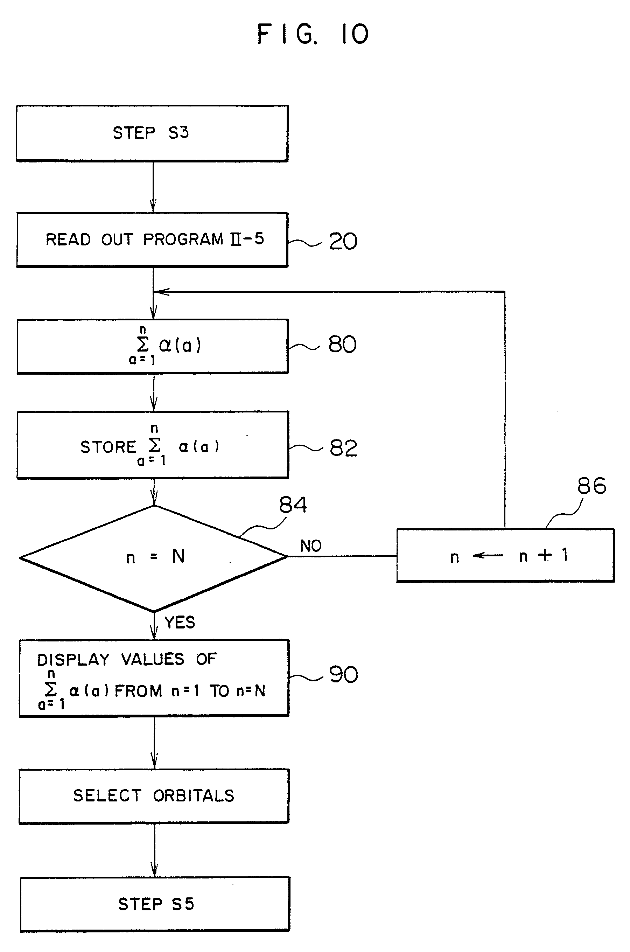

Next, explanation will be made of a fifth embodiment of a method of determining a property of a material in accordance with the present invention. The fifth embodiment is different from the first embodiment in calculation method for obtaining molecular polarizability. Accordingly, the read only memory 8 stores therein a program II-5 for calculating molecular polarizability in the fifth embodiment. Now, the feature of the fifth embodiment will be explained below, with reference to Fig. 10. In Figs. 4 and 10, the same reference numerals designate like steps, and the explanation of some of the like steps will be omitted from the following description.

In the fifth embodiment, the dividual values $\alpha(a)$ are summed up, that is

$$\sum_{a=1}^{n} \alpha(a)$$

11

is calculated (where n = 1, 2, 3 ... and n), and the values of the sum

$$\sum_{a=1}^{n} \alpha(a)$$

corresponding to $n$ values of $a$ are stored in the memory 2 (steps 80 to 86). Then, the values of the sum

$$\sum_{a=1}^{n} \alpha(a)$$

are displayed on the display screen in such a manner that the value of the sum

$$\sum_{a=1}^{n} \alpha(a)$$

is plotted as ordinate and the orbital number $a$ as abscissa. Fig. 11A shows the sum

$$\sum_{a=1}^{n} \alpha(a)$$

for water molecule. An operator judges the saturation value of the sum

$$\sum_{a=1}^{n} \alpha(a)$$

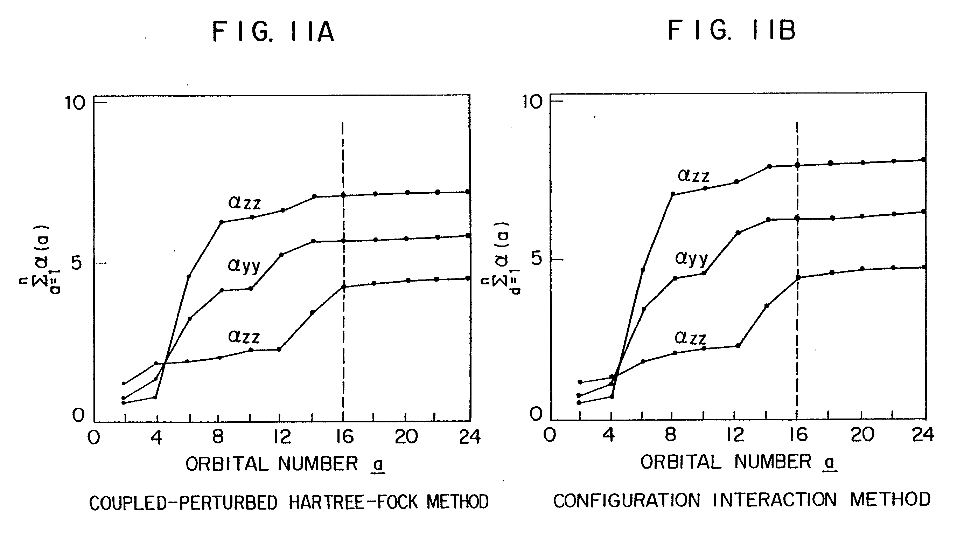

from the displayed data, and selects orbitals which are smaller in orbital number than or equal in orbital number to the orbital corresponding to the saturation value. This is because orbitals which are larger in orbital number than the orbital corresponding to the saturation value, will contribute little to molecular polarizability. Fig. 11B shows the values of the sum

$$\sum_{a=1}^{n} \alpha(a)$$

obtained in a case where the molecular polarizability of water is calculated by the second method in such a manner that the first orbital, the first and second orbitals, the first to third orbitals, ..., and the first to twenty-fourth orbitals are successively selected. In the second method, wave functions are calculated by the CI method, and molecular polarizability is calculated from the equation (2). It is to be noted that, in Figs. 11A and 11B, the distance between the oxygen atom and hydrogen atom of water molecule is set to 0.10 $\mu$m, the angle $\angle$HOH of water molecule is set to 115$^{\circ}$, and 24 basis functions are used by adding some kinds of bases to the basis 4-31G.

In both of Figs. 11A and 11B, the sum

$$\sum_{a=1}^{n} \alpha(a)$$

saturates at the sixteenth orbital. Accordingly, when the first to sixteenth orbitals are selected by the fifth embodiment, and the molecular polarizability is calculated through the second method by using the selected orbitals, the molecular polarizability thus obtained will agree with the molecular polarizability which is indicated by the sixteenth orbital in Fig. 11B. This molecular polarizability will be substantially equal to molecular polarizability which is calculated through the second method by using all the orbitals, though a calculation time necessary for calculating molecular polarizability by using the selected orbitals, is far shorter than a calculation time necessary for calculating molecular polarizability by using all the orbitals.

Although some embodiments of the present invention have been explained in the foregoing, the present invention is not limited to the embodiments, but changes or modifications can be readily made by those skilled in the art without departing from the scope and spirit of the present invention.

## Claims

1. A method of determining a property of a material, comprising the steps of:
decomposing molecular polarizability which is obtained by the coupled-perturbed Hartree-Fock method, into dividual values $\alpha(a)$ produced on a one-to-one basis for each molecular orbitals (step S3);
selecting orbitals on the basis of the dividual values $\alpha(a)$ produced for each molecular orbital (step S4);
calculating molecular polarizability by utilizing the configuration interaction method and by using the selected orbitals (step S7); and
calculating the property of the material by using the calculated molecular polarizability (step S9).

2. A method according to Claim 1, wherein the property of the material is one of a magnetic property and an optical property.

3. A method according to Claim 2, wherein the magnetic property indicates the dielectric constant of the material, and the optical property indicates one of the refractive index and non-linear optical characteristic of the material.

4. A method of determining molecular polarizability, comprising the steps of:
decomposing molecular polarizability which is obtained by the coupled-perturbed Hartree-Fock method, into dividual values $\alpha(a)$ produced on a one-to-one basis for each molecular orbital (step S3);
selecting orbitals on the basis of the dividual values $\alpha(a)$ produced for each molecular orbital (step S4); and
calculating molecular polarizability by utilizing the configuration interaction method and by using the selected orbitals (step S7).

5. A method of determining molecular polarizability as claimed in Claim 4, wherein the step (S4) of selecting orbitals includes a step (24, 26) of summing up all the dividual values $\alpha(a)$ to obtain tentative molecular polarizability $\alpha_p$, a step (28, 34, 36) of dividing each of the dividual values $\alpha(a)$ by the tentative molecular polarizability $\alpha_p$ to obtain a ratio of each dividual value to the tentative molecular polarizability, that is, a contributive ratio $K_a$, and a step (30, 32) of comparing the contribution ratio $K_a$ with a predetermined parameter $\mu$ to specify orbitals which are to be selected, on the basis of the results of comparison.

6. A method of determining molecular polarizability as claimed in Claim 5, wherein the step (S4) of selecting orbitals further includes a step (42) of displaying the contributive ratio $K_a$ of each molecular orbital.

7. A method of determining molecular polarizability as claimed in Claim 5, wherein the parameter $\mu$ can be set to a desired value.

8. A method of determining molecular polarizability as claimed in Claim 6, wherein the parameter $\mu$ is set to a desired value, with a view to the displayed contributive ratio $K_a$.

9. A method of determining molecular polarizability as clained in Claim 4, wherein the step (S4) of selecting orbitals includes a step (52) of rearranging the dividual values $\alpha(a)$ in order of magnitude, a step (54) of summing up all the dividual values $\alpha(a)$ to obtain tentative molecular polarizability $\alpha_p$, and a step (56, 58, 60, 62) of selecting orbitals which can satisfy the following formula:

$$\sum_{m=1}^{n} \alpha(A_m) \leq \alpha_{p\sigma}$$

where $\alpha(A_m)$ indicates dividual values rearranged in order of magnitude, $A_m$ indicates orbital numbers corresponding to the rearranged dividual values, $m$ indicates a natural number, $n$ indicates numerals capable of satisfying a formula $1 \leq n \leq N$, $A_N$ indicates the orbital number corresponding to the smallest dividual value, $\alpha_{p\sigma}$ indicates the product of the tentative molecular polarizability $\alpha_p$ and a parameter $\sigma$, and the parameter $\sigma$ satisfies a relation $0.90 < \sigma < 1.00$.

13

10. A method of determining molecular polarizability as claimed in Claim 4, wherein the step (S4) of selecting orbitals includes a step (52, 70) of rearranging the dividual values $\alpha(a)$ in order of magnitude and displaying the rearranged dividual values.

11. A method of determining molecular polarizability as claimed in Claim 4, wherein the step (S4) of selecting orbitals includes a step (52, 70) of rearranging the dividual values $\alpha(a)$ in order of magnitude and displaying the rearranged dividual values, and a step (72) of selecting orbitals on the basis of the displayed dividual values.

12. A method of determining molecular polarizability as claimed in Claim 4, wherein the step (S4) of selecting orbitals includes a step (80, 82, 84, 86, 90) of calculating the sum of the dividual values $\alpha(a)$ from the first orbital to the $n$-th orbital and displaying the sum of the dividual values so that the values of the sum correspond to the numbers $n$ of the final orbitals used in the calculation of the sum.

13. A method of determining molecular polarizability as claimed in Claim 4, wherein the step (S4) of selecting orbitals includes a step (80, 82, 84, 86, 90) of calculating the sum of dividual values $\alpha(a)$ from the first orbital to the $n$-th orbital and displaying the sum of the dividual values so that the values of the sum correspond to the numbers $n$ of the final orbitals used in the calculation of the sum and a step of selecting orbitals on the basis of displayed data.

14. A method of determining molecular polarizability as claimed in Claim 4, wherein the step (S3) of obtaining the dividual values $\alpha(a)$ includes a step of calculating wave functions by the Hartree-Fock approximation, and a step of decomposing molecular polarizability into dividual values by inserting the wave functions in the following equations:

$$\alpha_{i \atop tu} = \sum_{r,s} V_{rs}^{t} \sum_{j}^{VRT} (C_{ri}C_{sj} + C_{rj}C_{si}) A_{ji}^{u}$$

$$\alpha_{j \atop tu} = \sum_{r,s} V_{rs}^{t} \sum_{i}^{OCC} (C_{ri}C_{sj} + C_{rj}C_{si}) A_{ji}^{u}$$

where C indicates molecular orbital coefficients, V indicates a perturbation term due to an external electric field, A indicates first order coefficients in a case where C is expanded in a power series of an electric field based on the molecular orbital coefficients C, OCC indicates that summation with respect to occupied orbitals is carried out, VRT indicates that summation with respect to virtual orbitals is carried out, r and s indicate the numbers of the basis functions, and each of t and u indicates one of x-, y-, and z-directions.

15. A method of determining molecular polarizability as claimed in Claim 4, wherein the step (S7) of calculating molecular polarizability on the basis of the configuration interaction method includes a step of calculating wave functions $\psi$ by the configuration interaction method, and a step of calculating molecular polarizability by inserting the wave functions $\psi$ thus obtained in the following equation:

$$\alpha_{tu} = \sum_{I} \frac{2 (\Psi_0 | V^t | \Psi_I)(\psi_0 | V^u | \psi_I)}{E_1 - E_0}$$

where each of t and u indicates one of x-, y-, and z-directions, $E_I$ indicates the energy of an excited state, I indicates the numbers of the energy levels, $\psi_0$ is the wave function indicating the ground state, and $E_0$ indicates the energy of the ground state.

16. A method of selecting orbitals which are used in calculating molecular polarizability on the basis of the configuration interaction method, comprising the steps of:
decomposing molecular polarizability which is obtained by the coupled-perturbed Hartree-Fock method, into dividual values $\alpha(a)$ produced on a one-to-one basis for each molecular orbital (step S3); and
selecting orbitals on the basis of the dividual values $\alpha(a)$ produced for each molecular orbital (step S4).

17. An apparatus for determining a property of a material, comprising:
means (1, 2, 8) for decomposing molecular polarizability which is obtained by the coupled-perturbed Hartree-Fock method, into dividual values $\alpha(a)$ produced on a one-to-one basis for each molecular orbital;
means (1, 2, 8) for selecting orbitals on the basis of the dividual values $\alpha(a)$ produced for each molecular

14

orbital;

means (1, 2, 8) for calculating molecular polarizability by utilizing the configuration interaction method and by using the selected orbitals; and

means (1, 2, 8) for calculating the property of the material by using the calculated molecular polarizability.

18. An apparatus for determining molecular polarizability, comprising:

means (1, 2, 8) for decomposing molecular polarizability which is obtained by the coupled-perturbed Hartree-Fock method, into dividual values $\alpha(a)$ produced on a one-to-one basis for each molecular orbital;

means (1, 2, 8) for selecting orbitals on the basis of the dividual values $\alpha(a)$ produced for each molecular orbital;

means (1, 2, 8) for calculating molecular polarizability by utilizing the configuration interaction method and by using the selected orbitals.

19. An apparatus for determining molecular polarizability as claimed in Claim 18, wherein the means for selecting orbitals includes means (1, 2, 8) for summing up all the dividual values $\alpha(a)$ to obtain tentative molecular polarizability $\alpha_p$, means (1, 2, 8) for dividing each of the dividual values $\alpha(a)$ by the tentative molecular polarizability $\alpha_p$ to obtain a ratio of each dividual value to the tentative molecular polarizability, that is, a contributive ratio $K_a$, and means (1, 2, 8) for comparing the contributive ratio $K_a$ with a predetermined parameter $\mu$ to specify orbitals which are to be selected, on the basis of the results of comparison.

20. An apparatus for determining molecular polarizability as claimed in Claim 19, wherein the means for selecting orbitals further includes means (3) for displaying the contributive ratio $K_a$ of each molecular orbital.

21. An apparatus for determining molecular polarizability as claimed in Claim 18, wherein the means for selecting orbitals includes means (1, 2, 8) for rearranging the dividual values $\alpha(a)$ in order of magnitude, means (1, 2, 8) for summing up all the dividual values $\alpha(a)$ to obtain tentative molecular polarizability $\alpha_p$, and means (1, 2, 8) for selecting orbitals which can satisfy the following formula:

$$\sum_{m=1}^{n} \alpha(A_m) \leq \alpha_{p\sigma}$$

where $\alpha(A_m)$ indicates dividual values rearranged in order of magnitude, $A_m$ indicates orbital numbers corresponding to the rearranged dividual values, m indicates a natural number, n indicates numerals capable of satisfying a formula $1 \leq n \leq N$, $A_N$ indicates the orbital number corresponding to the smallest dividual value, $\alpha_{p\sigma}$ indicates the product of the tentative molecular polarizability $\alpha_p$ and a parameter $\sigma$, and the parameter $\sigma$ satisfies a relation $0.90 < \sigma < 1.00$.

22. An apparatus for determining molecular polarizability as claimed in Claim 18, wherein the means for selecting orbitals includes means (1, 2, 3, 8) for rearranging the dividual values $\alpha(a)$ in order of magnitude and for displaying the rearranged dividual values.

23. An apparatus for determining molecular polarizability as claimed in Claim 18, wherein the means for selecting orbitals includes means (1, 2, 3, 8) for calculating the sum of the dividual values $\alpha(a)$ from the first orbital to the n -th orbital and for displaying the sum of the dividual values so that the values of the sum correspond to the numbers of the final orbitals used in the calculation of the sum.

24. An apparatus for selecting orbitals which are used in calculating molecular polarizability by utilizing the configuration interaction method, the apparatus comprising:

means (1, 2, 8) for decomposing molecular polarizability which is obtained by the coupled-perturbed Hartree-Fock method, into dividual values $\alpha(a)$ produced on a one-to-one basis for each molecular orbital; and

means (1, 2, 8) for selecting orbitals on the basis of the dividual values $\alpha(a)$ produced for each molecular orbital.

# F I G. 1

# F I G. 2

EP 0 405 490 A2

FIG. 3

```
            ┌─────────────┐
            │    START    │
            └─────────────┘
                   │
                   ▼
      ┌──────────────────────┐
      │  READ OUT PROGRAM I  │ ～S1
      └──────────────────────┘
                   │
                   ▼
      ┌──────────────────────┐
      │   INPUT PARAMETERS   │ ～S2
      └──────────────────────┘
                   │
                   ▼
      ┌──────────────────────┐
      │  CALCULATE DIVIDUAL  │ ～S3
      │ VALUES α(i) AND α(j) │
      └──────────────────────┘
                   │
                   ▼
      ┌──────────────────────┐
      │    SELECT ORBITS     │ ～S4
      └──────────────────────┘
                   │
                   ▼
      ┌──────────────────────┐
      │ READ OUT PROGRAM III │ ～S5
      └──────────────────────┘
                   │
                   ▼
      ┌──────────────────────┐
      │   INPUT PARAMETERS   │ ～S6
      └──────────────────────┘
                   │
                   ▼
      ┌──────────────────────┐
      │ CALCULATE MOLECULAR  │ ～S7
      │    POLARIZABILITY    │
      └──────────────────────┘
                   │
                   ▼
      ┌──────────────────────┐
      │ READ OUT PROGRAM IV  │ ～S8
      └──────────────────────┘
                   │
                   ▼
      ┌──────────────────────┐
      │ CALCULATE DIELECTRIC │ ～S9
      │      CONSTANT        │
      └──────────────────────┘
                   │
                   ▼
            ┌─────────────┐
            │     END     │
            └─────────────┘
```

FIG. 4

```
                    ┌─────────────────────┐
                    │       STEP S3       │
                    └─────────────────────┘
                               │
                               ▼
                    ┌─────────────────────┐
                    │  READ OUT PROGRAM Ⅱ │ ～20
                    └─────────────────────┘
                               │
                               ▼
                    ┌─────────────────────┐
                    │  INPUT PARAMETER μ  │ ～22
                    └─────────────────────┘
                               │
         ┌────────────────────►│
         │                     ▼
         │     ┌───────────────────────────────────────┐
         │     │ SUM UP DIVIDUAL VALUES TO OBTAIN       │ ～24
         │     │ TENTATIVE MOLECULAR POLARIZABILITY αP  │
         │     └───────────────────────────────────────┘
         │                     │
         │                     ▼
         │     ┌───────────────────────────────────────┐
         │     │  READ OUT DIVIDUAL VALUE α(a)          │ ～26
         │     │  CORRESPONDING TO a-TH ORBITAL         │
         │     └───────────────────────────────────────┘
         │                     │
         │                     ▼
         │          ┌──────────────────────┐
         │          │  Ka ← α(a) / αP      │ ～28
         │          └──────────────────────┘
         │                     │
         │                     ▼                30
         │              ◇─────────────◇   YES
         │             ◇    Ka > N      ◇──────────┐
         │              ◇─────────────◇            │
         │                   │ NO                  ▼
         │                   │         ┌──────────────────────┐
         │                   │         │  STORE  ORBITAL      │ ～32
         │                   │         │  NUMBER  a           │
         │                   │         └──────────────────────┘
         │                   │                     │
         │                   ◄─────────────────────┘
         │                   ▼
         │          ┌──────────────────────┐
         │          │    a ← a + 1         │ ～34
         │          └──────────────────────┘
         │                   │
         │                   ▼              36
         │    NO      ◇─────────────◇
         └───────────◇    a = N       ◇
                      ◇─────────────◇
                           │ YES
                           ▼
              ┌───────────────────────────────────────┐
              │  DISPLAY THE NUMBERS OF THE            │ ～38
              │  SELECTED ORBITALS                     │
              └───────────────────────────────────────┘
                           │
                           ▼
                    ┌─────────────────────┐
                    │      STEP 5         │
                    └─────────────────────┘
```

# F I G. 5

```
┌─────────────────┐
│    STEP S3      │
└────────┬────────┘
         │ ～20
┌────────▼────────┐
│   READ OUT      │
│ · PROGRAM Ⅱ-2   │
└────────┬────────┘
         │ ～24
┌────────▼────────┐
│ SUM UP DIVIDUAL │
│ VALUES TO OBTAIN│
│ TENTATIVE       │
│ MOLECULAR       │
│ POLARIZABILITY αP│
└────────┬────────┘
         │ ～26
┌────────▼────────┐
│   READ OUT      │
│ DIVIDUAL VALUE  │
│ α(α) OF α-TH    │
│ ORBITAL         │
└────────┬────────┘
         │ ～28
┌────────▼────────┐
│  Kα ← α(α)/αP   │
└────────┬────────┘
         │ ～40
┌────────▼────────┐
│   STORE  Kα     │
└────────┬────────┘
         │ ～34
┌────────▼────────┐
│   α ← α + 1     │
└────────┬────────┘
         │ ～36
     ╱───▼───╲
 NO ╱  α = N   ╲
◄──╱            ╲
    ╲          ╱
     ╲───┬───╱
         │ YES   ～42
┌────────▼────────┐
│  DISPLAY Kα OF  │
│  EACH ORBITAL   │
└────────┬────────┘
         │ ～44
┌────────▼────────┐
│ INPUT PARAMETER μ│
└─────────────────┘
```

READ OUT CONTRIBUTIVE RATIO Kα OF α-TH ORBITAL. ～46

kα > N — YES → STORE ORBITAL NUMBER a ～32

NO

α ← α + 1 ～34

α = N ～36  NO / YES

DISPLAY THE NUMBERS OF THE SELECTED ORBITALS ～38

STEP S5

F I G. 6

F I G. 7

```
┌─────────────────────────┐
│        STEP S3          │
└─────────────────────────┘
            │
            ▼
┌─────────────────────────┐
│  READ OUT PROGRAM Ⅱ-3   │～20
└─────────────────────────┘
            │
            ▼
┌─────────────────────────┐
│    SET PARAMETER ζ      │～50
└─────────────────────────┘
            │
            ▼
┌─────────────────────────┐
│ REARRANGE·DIVIDUAL      │
│ VALUES IN ORDER OF      │
│ MAGNITUDE AND INDICATE  │～52
│ ORBITALS CORRESPONDING  │
│ TO REARRANGED DIVIDUAL  │
│ VALUES BY NUMBERS A₁ TO Aɴ│
└─────────────────────────┘
            │
            ▼
┌─────────────────────────┐
│  $\sum\limits_{m=1}^{N} \alpha(Am) = \alpha P$  │～54
└─────────────────────────┘
            │
            ▼
┌─────────────────────────┐
│   $\alpha P \times \sigma = \alpha P\sigma$   │～56
└─────────────────────────┘
            │
            ▼
```

58

$$\sum_{m=1}^{n} \alpha(Am) \leqq \alpha P\sigma \quad \text{YES}$$

60

NO    38

┌─────────────────────────┐
│ STORE ORBITAL NUMBER a   │
│ CORRESPONDING ·TO THE    │
│ NUMBER Aɴ                │
└─────────────────────────┘

┌─────────────────────────┐
│ DISPLAY THE NUMBERS     │
│ OF THE SELECTED         │
│ ORBITALS                │
└─────────────────────────┘

62

┌─────────────────────────┐
│       n ─ n + 1         │
└─────────────────────────┘

┌─────────────────────────┐
│        STEP S5          │
└─────────────────────────┘

# F I G. 8

```
┌─────────────────────────────┐
│          STEP  S3           │
└─────────────────────────────┘
               │
               ▼
┌─────────────────────────────┐
│    READ OUT PROGRAM II-4    │ ～ 20
└─────────────────────────────┘
               │
               ▼
┌─────────────────────────────┐
│ REARRANGE DIVIDUAL          │
│ VALUES IN ORDER OF          │
│ MAGNITUDE AND INDICATE      │ ～ 52
│ ORBITALS CORRESPONDING      │
│ TO REARRANGED DIVIDUAL      │
│ VALUES BY NUMBERS A1 TO AN  │
└─────────────────────────────┘
               │
               ▼
┌─────────────────────────────┐
│ DISPLAY  REARRANGED         │ ～ 70
│ DIVIDUAL VALUES  α(Am)      │
└─────────────────────────────┘
               │
               ▼
┌─────────────────────────────┐
│      SELECT  ORBITALS       │ ～ 72
└─────────────────────────────┘
               │
               ▼
┌─────────────────────────────┐
│ DISPLAY  THE  NUMBERS OF    │ ～ 74
│ THE  SELECT  ORBITALS       │
└─────────────────────────────┘
               │
               ▼
┌─────────────────────────────┐
│          STEP  S5           │
└─────────────────────────────┘
```

# F I G. 9

$\alpha$ (Am)

0   10   20   30   40   50   60   70   80

A$x$            Am

# F I G. 10

STEP S3

READ OUT PROGRAM II-5 — 20

$\sum\limits_{a=1}^{n} \alpha(a)$ — 80

STORE $\sum\limits_{a=1}^{n} \alpha(a)$ — 82

84

$n = N$

86

$n \leftarrow n + 1$

NO

YES

DISPLAY VALUES OF
$\sum\limits_{a=1}^{n} \alpha(a)$ FROM n=1 TO n=N — 90

SELECT ORBITALS

STEP S5

# FIG. IIA

COUPLED-PERTURBED HARTREE-FOCK METHOD

# FIG. IIB

CONFIGURATION INTERACTION METHOD

EP 0 405 490 A2